(19) **Europäisches Patentamt / European Patent Office / Office européen des brevets**

(11) **EP 3 328 610 B1**

(12) **FASCICULE DE BREVET EUROPEEN**

(45) Date de publication et mention
de la délivrance du brevet:
**04.09.2019 Bulletin 2019/36**

(21) Numéro de dépôt: **16744805.9**

(22) Date de dépôt: **05.07.2016**

(51) Int Cl.:
***B29C 45/27*** *(2006.01)*

(86) Numéro de dépôt international:
**PCT/FR2016/051696**

(87) Numéro de publication internationale:
**WO 2017/017327 (02.02.2017 Gazette 2017/05)**

(54) **MOULE D'INJECTION ET PROCEDE ASSOCIE D'INJECTION DE PIECE EN MATIERE PLASTIQUE**

SPRITZGUSSFORM UND ZUGEHÖRIGES VERFAHREN ZUM EINSPRITZEN EINES KUNSTSTOFFTEILS

INJECTION MOULD AND ASSOCIATED METHOD FOR INJECTING A PLASTIC PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2015 FR 1557178**

(43) Date de publication de la demande:
**06.06.2018 Bulletin 2018/23**

(73) Titulaire: **Renault S.A.S.**
**92100 Boulogne-Billancourt (FR)**

(72) Inventeurs:
• **BESSIERES, Nicolas**
  **91300 Massy (FR)**
• **MICHAUD, Herve**
  **28000 Chartres (FR)**
• **GAZONNET, Guillaume**
  **78124 Mareil Sur Mauldre (FR)**

(56) Documents cités:
| | |
|---|---|
| **WO-A1-01/23156** | **DE-A1-102013 205 141** |
| **GB-A- 2 322 589** | **JP-A- S6 122 918** |
| **JP-A- H08 252 838** | **US-A1- 2004 012 122** |
| **US-A1- 2006 237 871** | **US-A1- 2011 026 268** |

EP 3 328 610 B1

**Description**

L'invention concerne les moules d'injection de matières plastiques, notamment les moules d'injection pour matières thermoplastiques destinés à réaliser des pièces sensiblement planes avec des exigences « d'aspect ». Par exemple dans l'habillage intérieur automobile, on utilise nombre de pièces sensiblement planes, sous forme de panneaux en matière thermoplastique, dont l'aspect de surface résulte d'une rugosité de la pièce imprimée par la surface du moule d'injection, ainsi que des conditions d'injection (température, pression, cisaillement...) de la matière dans ce moule.

Ainsi en fonction des conditions de température, de cisaillement, de chaque ligne de flux de matière arrivant puis s'écoulant dans le moule, des hétérogénéités d'aspect de surface peuvent apparaître sous forme de bandes de la surface d'aspect, voire sous forme de ligne de ressoudure dans le cas d'un écoulement mal maîtrisé, notamment si la pièce présente des orifices réalisés de moulage. Les différences de vitesses d'écoulement entre différentes lignes de flux peuvent se traduire par des hétérogénéités d'aspect encore exacerbées par l'utilisation de matières d'aspect métallisé colorées dans la masse. L'aspect métallisé étant généralement obtenu par des paillettes de matière brillantes ajoutées dans le thermoplastique, une orientation variable de ces paillettes exacerbe la visibilité de conditions non uniformes d'écoulement lors du moulage de la pièce.

Pour ces raisons, on cherche souvent à obtenir un écoulement de la matière à l'entrée du moule permettant des conditions d'écoulement à iso-vitesse ou à iso-cisaillement, de préférence le long d'un front de matière large le long d'un bord de la pièce. On obtient ainsi ensuite dans le moule, un écoulement relativement uniforme, formant un front de matière qui avance dans le moule, du moins en début d'injection, suivant une ligne de front sensiblement parallèle à la ligne définie par le seuil d'injection. La matière est donc injectée sous forme de nappe, c'est-à-dire que la cavité de moulage du moule est alimentée à partir d'une nappe de matière ménagée dans le moule. Cette nappe est sensiblement plane, généralement sensiblement triangulaire, et rejoint la cavité de moulage par une série de points d'entrée formant une ligne désignée par le terme de "seuil d'injection".

Des moules d'injection pour pièces d'aspect comportent fréquemment une nappe d'injection reliant un point d'alimentation, au niveau duquel la matière arrive dans la moule par exemple par une busette d'injection, et à partir duquel la matière s'écoule ensuite vers les points d'une ligne formant le seuil d'injection d'une cavité de moulage. Le seuil d'injection forme une ligne le long d'un bord de la cavité de moulage définissant les contours de la pièce dans le moule. La matière injectée entre dans la cavité de moulage par le seuil d'injection, par exemple suivant une direction sensiblement perpendiculaire à celui-ci.

Pour obtenir une pièce d'aspect, une relative homogénéité des conditions de vitesse de la matière arrivant dans la cavité au niveau du seuil d'injection est souhaitable. Elle peut être obtenue en allongeant la distance entre le point d'alimentation de matière et le seuil d'injection. Ainsi les bords de la nappe d'injection triangulaire reliant le point d'arrivée de matière et le seuil d'injection, sont plus longs que le seuil d'injection lui-même, et les différences relatives de longueur entre les lignes d'écoulement arrivant au seuil d'injection son atténuées. Une telle disposition impose une architecture du moule qui peut être volumineuse. Le moule est alors à la fois plus coûteux à réaliser en terme de quantité de matière mise en oeuvre, plus lourd à manipuler, voire dans certains cas peut nécessiter des forces de fermeture élevées.

Le document DE102013205141A1 décrit un moule d'injection pour matières plastiques comprenant une cavité de moulage et une chambre sensiblement triangulaire configurée pour permettre l'écoulement d'une nappe de matière entre un coin d'entrée et un côté opposé de sortie.

L'invention a pour but de proposer un moule d'injection permettant d'obtenir des pièces injectées, par exemple de type panneaux thermoplastiques, d'aspect uniforme, sans augmenter les dimensions du moule d'injection par rapport à un moule d'injection usuel à nappe d'injection triangulaire.

A cette fin, il est proposé un moule d'injection pour matières plastiques, comprenant au moins une première empreinte et une deuxième empreinte complémentaire de la première empreinte, la deuxième empreinte étant configurée pour se fermer sur la première empreinte de manière à définir entre la première et la deuxième empreinte :

- une cavité de moulage définissant la surface d'au moins une partie d'une pièce à injecter,
- une chambre sensiblement triangulaire présentant un coin d'entrée de matière et un côté opposé de sortie de matière vers la cavité de moulage, configurée pour permettre l'écoulement d'une nappe sensiblement triangulaire de matière entre le coin d'entrée et le côté opposé de sortie.

La chambre présente une double concavité, de manière à ce que, pour chaque point du côté de sortie, le plus court trajet d'écoulement entre le coin d'entrée et ce point du côté de sortie, soit de longueur sensiblement égale à une même longueur correspondant à un premier trajet d'écoulement parmi les plus courts trajets d'écoulement.

Par matière plastique, on entend ici des matières aptes à être injectées à l'état visqueux ou liquide par un canal d'alimentation dans un moule à cavité de moulage fermée. Il peut s'agir de matières polymères, notamment de matières polymères thermoplastiques. L'écoulement s'entend ici au sens général d'écoulement de matières visqueuses à liquides par exemple sous l'effet d'une pression et d'un cisaillement appliqués à la matière.

Le moule est apte à être alimenté en matière par un canal d'alimentation, l'extrémité du canal d'alimentation débouchant dans le coin d'entrée de la chambre. La cavité de moulage est de préférence configurée pour venir en contact avec les deux faces de chaque portion sensiblement plane de la pièce. Le canal d'alimentation peut être défini dans le moule lui-même, ou peut être défini dans une busette extérieure au moule. Les côtés de la chambre triangulaire peuvent être curvilignes.

Le premier trajet d'écoulement peut être par exemple choisi comme un trajet d'écoulement le long d'un premier côté de la chambre triangulaire adjacent au côté de sortie, par exemple de celui des deux côtés adjacents qui est de plus grande longueur, si une différence de longueur est mesurable entre ces deux côtés. Par longueur sensiblement égale, on entend ici une longueur ne différant pas de plus de 6%. Selon l'invention, la longueur de chaque plus court trajet d'écoulement est donc comprise entre 0,94 et 1,06 fois la longueur du plus long des côtés du triangle adjacents au côté de sortie, que l'on choisit comme premier côté du triangle. Si le premier côté du triangle est curviligne, la longueur prise en compte pour ce côté est mesurée de manière curviligne. De manière avantageuse, pour chaque point du côté de sortie, le plus court trajet d'écoulement entre le coin d'entrée et ce point du côté de sortie, diffère même de moins de 3% de la longueur du premier côté du triangle adjacent au côté de sortie.

De manière préférentielle, les côtés de la chambre triangulaire adjacents au côté de sortie sont rectilignes. Ce mode de réalisation peut être particulièrement avantageux si le côté de sortie de la chambre triangulaire est sensiblement rectiligne, ou si le côté de sortie présente une concavité dans le plan de base du triangle, dans laquelle vient s'insérer une portion convexe de la cavité de moulage. Selon un autre mode de réalisation, au moins un côté de la chambre triangulaire adjacent au côté de sortie est curviligne. Selon une variante de réalisation, les deux côtés du triangle adjacents au côté de sortie sont curvilignes, et au moins une des lignes d'écoulement potentiel entre le coin d'entrée et un des points du côté de sortie est rectiligne. Ce mode de réalisation peut être particulièrement avantageux si la chambre triangulaire présente le long de son côté de sortie une portion convexe dans le plan de base du triangle, s'insérant dans une portion concave de la cavité de moulage /de la pièce à injecter. Par plan de base de la chambre triangulaire à bords rectilignes ou curvilignes, on entend ici le plan géométrique passant par les coins du triangle auquel est assimilée la chambre.

Par surface présentant une double concavité en un point donné, on entend ici, une surface dont les sections par deux plans géométriques perpendiculaires et correspondant aux lignes de courbures principales de cette surface en ce point, sont deux courbes présentant chacune au moins localement, au voisinage de ce point donné, une concavité orientée du même côté de la surface. Au vu de cette définition, un cylindre ou un cône par exemple, présentent donc une concavité simple et non double.

De préférence, la nappe d'injection (donc la chambre triangulaire) présente une double concavité pour au moins un point de la nappe (de la chambre triangulaire) distinct des bords de la nappe (des bords de la chambre triangulaire).

Selon un mode de réalisation préféré, toutes les intersections de la nappe d'injection / de la chambre triangulaire, par un plan perpendiculaire au plan de base du triangle et passant par le coin d'entrée, sont des courbes rectilignes ou des courbes présentant chacune une seule concavité. Toutes ces seules concavités sont de préférence orientées dans le même sens. Selon un autre mode de réalisation, la chambre peut présenter plusieurs ondulations dans au moins un plan de coupe reliant le coin d'entrée et un des points du seuil d'injection.

Les côtés de la chambre triangulaire adjacents au côté de sortie peuvent avantageusement être rectilignes.

La distance en ligne droite entre les deux coins de la chambre triangulaire qui sont opposés au coin d'entrée, est de préférence supérieure ou égale à deux tiers de la longueur de chacun des côtés de la chambre triangulaire issus du coin d'entrée.

Selon un mode de réalisation avantageux, la distance en ligne droite entre les deux coins opposés au coin d'entré est même supérieure ou égale à la longueur du premier côté du triangle. La distance en ligne droite entre les deux coins opposés au coin d'entrée peut typiquement rester inférieure ou égale à une fois et demi la longueur du premier côté du triangle -du plus long des côtés issus du coin d'entrée-, notamment si on souhaite éviter de recourir à une nappe d'injection au relief trop marqué.

Le côté de sortie peut définir une ligne de réduction d'épaisseur de l'espace disponible à l'écoulement de la matière, à la fois par rapport à l'épaisseur de la chambre et par rapport à l'épaisseur de la cavité d'injection. La restriction d'épaisseur peut être typiquement d'au moins 0,3 fois l'épaisseur locale de la chambre, et peut être supérieure ou égale à 0,4 fois l'épaisseur locale de la chambre.

En amont de la restriction d'épaisseur, le long du côté de sortie, la chambre peut définir une portion de nappe sensiblement alignée, dans chaque plan perpendiculaire au côté de sortie, avec le rebord de la pièce définie par la cavité de moulage.

Cette portion de nappe peut typiquement comprendre un bandeau de largeur au moins égale à 3 fois l'épaisseur locale du rebord de la pièce au voisinage du côté de sortie.

Selon un mode de réalisation avantageux, le côté de sortie comprend un premier point de sortie de matière qui est au moins aussi éloigné en ligne droite du coin d'entrée, que les autres points du côté de sortie, et comprend au moins un deuxième point de sortie de matière, distinct du premier point de sortie de matière, strictement plus proche en ligne droite du coin d'entrée que le premier point de sortie. Le trajet d'écoulement le plus court entre le coin d'entrée et ce deuxième point de sortie est une courbe non rectiligne telle que la différence relative entre les plus courts trajets d'écoulement, respectivement entre le coin d'entrée et le premier point de sortie, et entre le coin d'entrée et le deuxième point de sortie, est inférieure en valeur absolue à la différence relative de distances géométriques respectivement entre le coin d'entrée et le premier point de sortie, et entre le coin d'entrée et le deuxième point de sortie. Par différence relative entre deux distances rectilignes ou curvilignes, on prend ici par convention la valeur absolue de la différence entre les deux distances, divisée par la plus petite des distances.

Ainsi, si on note OA la distance géométrique entre un coin d'entrée O et un premier point de sortie A, OB la distance géométrique entre un coin d'entrée O et un deuxième point de sortie B plus proche de O que A, Fl(OA) le plus court trajet d'écoulement de matière du coin d'entrée vers le premier point de sortie au travers de la chambre triangulaire, Fl(OB) le plus court trajet d'écoulement de matière du coin d'entrée vers le premier point de sortie au travers de la chambre triangulaire, alors :

$$\frac{|Fl(OA) - Fl(OB)|}{\max(Fl(OA), Fl(OB))} \leq \frac{|OA - OB|}{OA}$$

De manière préférentielle, pour chaque deuxième point de sortie de matière, plus proche du coin d'entrée que le premier point de sortie, la différence relative entre les plus courts trajets d'écoulement, respectivement entre le coin d'entrée et le premier point de sortie, et entre le coin d'entrée et le deuxième point de sortie, peut être inférieure en valeur absolue à la différence relative de distances géométriques respectivement entre le coin d'entrée et le premier point de sortie, et entre le coin d'entrée et le deuxième point de sortie.

Pour chaque deuxième point de sortie de matière, plus proche du coin d'entrée que le premier point de sortie, la différence relative entre les plus courts trajets d'écoulement, respectivement entre le coin d'entrée et le premier point de sortie, et entre le coin d'entrée et le deuxième point de sortie, peut même être inférieure en valeur absolue à la moitié de la différence relative de distances géométriques respectivement entre le coin d'entrée et le premier point de sortie, et entre le coin d'entrée et le deuxième point de sortie.

Autrement dit, avec les mêmes notations que précédemment :

$$\frac{|Fl(OA) - Fl(OB)|}{\max(Fl(OA), Fl(OB))} \leq \frac{|OA - OB|}{2 * OA}$$

Selon un autre aspect, il est proposé un procédé de fabrication d'une pièce en matière plastique, comprenant une étape d'injection dans un moule tel que décrit précédemment, et une étape de séparation de la pièce d'avec la nappe de matière formée par la matière figée dans la chambre triangulaire.

Quelques buts, caractéristiques et avantages de l'invention apparaîtront à la lecture de la description suivante, donnée uniquement à titre d'exemple non limitatif et faite en références aux dessins annexés, sur lesquels :

La figure 1 est une vue schématique d'un moule d'injection de matières plastiques selon un mode de réalisation de l'invention;
La figure 2 est une représentation schématique en perspective de d'une nappe d'injection d'un moule selon un mode de réalisation de l'invention;
La figure 3 est une superposition de projections latérales de quelques trajets de matière "au plus court", entre un point d'alimentation de la nappe de la figure 2 et différents points d'un seuil d'injection bordant cette nappe;
La figure 4 illustre de manière géométrique, des valeurs relatives de compensation de trajet de matière injectée dans un moule d'injection selon un mode de réalisation de l'invention.

Nota bene : Dans la description qui suit des caractéristiques d'un moule d'injection plastique selon l'invention, par abus de langage, un amalgame est parfois fait en désignant indifféremment les cavités du moule et la matière thermoplastiques remplissant ces cavités, puisque la cavité définit la forme des la matière thermoplastique qu'elle contient. Ainsi la description mentionne parfois la géométrie de la pièce moulée pour décrire la géométrie de la cavité de moulage, et décrit parfois la géométrie de la nappe de matière thermoplastique dans la cavité triangulaire pour décrire les caractéristiques géométriques de cette cavité. En outre, on désigne parfois par la suite la chambre triangulaire par l'expression raccourcie "le triangle".

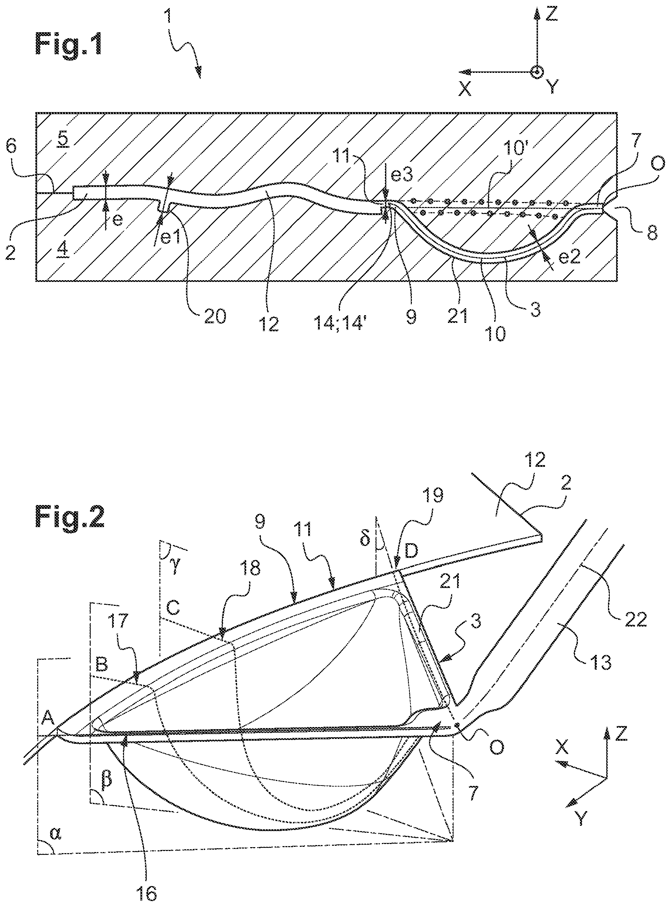

Tel qu'illustré sur la figure 1, il est proposé un moule d'injection 1 comprenant une première empreinte 4 et une deuxième empreinte 5 complémentaire de la première empreinte, et configurée pour se fermer sur la première empreinte, de manière à former une cavité de moulage 2 définissant le contour extérieur d'une pièce 12 à injecter. L'alimentation en matière à injecter de la cavité de moulage se fait à partir d'un orifice d'alimentation 8, au travers d'une chambre triangulaire 3, à partir de laquelle la matière à injecter pénètre dans la cavité de moulage 2 le long d'une ligne 11 formant un seuil d'injection de matière plastique de la cavité de moulage 2. La ligne 11 est ici perpendiculaire au plan de la figure. L'orifice d'alimentation 8 se trouve au niveau d'un coin d'alimentation 7 de la chambre triangulaire 3.

A titre d'exemple, deux points particuliers 14 et 14' du seuil d'injection 11 sont représentés sur la figure 1. Le plus court trajet d'écoulement matière entre l'orifice d'alimentation 8 et respectivement les points 14 et 14' est désigné respectivement par la référence 10 et par la référence 10'. Dans l'exemple illustré sur la figure 1, le point 14' se trouve à une extrémité du seuil d'injection 11, c'est-à-dire par rapport à la chambre triangulaire 3, au niveau d'un des coins du triangle opposé au point d'alimentation O. Le point d'alimentation O se trouve au niveau du coin d'entrée 7 de la chambre triangulaire 3. Le point 14 se trouve sur le seuil d'injection 11, quelque part à distance de chacune des extrémités du seuil. Le seuil d'injection 11 longe une ligne 9 de la surface moyenne de la chambre triangulaire qui peut être désignée comme le côté de sortie de la chambre triangulaire 3. Comme on peut le voir sur la figure 1, la chambre 3 n'est pas plane, mais forme une surface assimilable à une coque, coque qui étendant ici d'un seul côté du plan du triangle défini par le coin d'entrée O et les extrémités du seuil d'alimentation 11. On peut cependant envisager des variantes de réalisation (non représentées) dans lesquelles la chambre triangulaire forme une coque présentant des ondulations de part et d'autres de ce plan.

La pièce 2 peut être typiquement une pièce sensiblement plane ou peut présenter une géométrie assimilable à une coque, plane ou non. Cette pièce peut présenter une épaisseur "e" sensiblement constante, cette épaisseur étant petite (typiquement au moins dix fois plus petite) qu'au moins deux autres dimensions de la pièce. Typiquement, la pièce à injecter 12 peut présenter une épaisseur "e" sensiblement identique en une majorité de régions de la pièce. La pièce peut présenter une série de nervures 20 au niveau desquelles la pièce est plus épaisse. Au niveau des nervures, la pièce peut présenter une deuxième épaisseur "e1" correspondant sensiblement à la hauteur des nervures. La pièce peut présenter quelques zones d'épaisseur plus réduite ou des trous traversants (non représentés).

Le seuil d'injection 11 peut être matérialisé entre la chambre triangulaire 3 et la cavité de moulage 2 par une restriction d'épaisseur visible par exemple sur la figure 1. Le seuil peut présenter par exemple à cet endroit une épaisseur "e3" inférieure ou égale à l'épaisseur moyenne de la pièce injectée 12, par exemple inférieure ou égal à la moitié de l'épaisseur de la pièce 12 au voisinage du seuil, voire inférieure ou égale au tiers de l'épaisseur de la pièce au voisinage du seuil. Cette restriction d'épaisseur permet de faciliter une découpe manuelle instrumentée du bord de la pièce 12 une fois la pièce 12 injectée, afin de séparer la pièce 12 de la nappe de matière injectée 21, une fois l'ensemble nappe + pièce extrait du moule 1.

La chambre triangulaire 3 relie l'orifice d'alimentation matière 8 avec les différents points du seuil d'injection 11, notamment avec les extrémités "A", "D" de ce seuil d'injection. Le contour de la chambre triangulaire est assimilable à un triangle A, D O. Les points A, D apparaissent superposés sur la figure 1, le plan de coupe étant perpendiculaire au seuil d'injection, et le point A étant représenté bien qu'étant en avant de la figure. Les extrémités "A", "D" du seuil d'injection 11 forment un premier et un deuxième coin du triangle. Le troisième coin du triangle est un point "O" se trouvant dans le prolongement des deux côtés de la chambre triangulaire adjacents au seuil d'injection. Le point "O", que l'on désigne ici par "point d'alimentation matière" peut coïncider sensiblement avec un axe central de l'orifice d'alimentation matière 8.

La chambre triangulaire présente une épaisseur sensiblement constante "e2" de manière à imposer sensiblement un même taux de cisaillement au niveau de chaque trajet 10, 10'... d'écoulement de matière entre le point d'alimentation O et le seuil d'injection 11.

Par "bord latéral" de la chambre triangulaire, on entend par la suite, un bord reliant le point d'alimentation de matière et une des extrémités A, D du seuil d'injection 11.

L'orifice d'alimentation matière 8 peut être typiquement un orifice sensiblement conique ménagé sur un bord du moule, de manière à permettre d'y appuyer une busette d'alimentation de matière plastique (non représentée sur la figure 1). Le moule peut être équipé d'éléments de fixation (non représentés) permettant de le monter sur une presse d'injection plastique (non représentée). La presse peut être configurée pour permettre de fermer le moule le long d'un plan de joint 6 le long duquel la première empreinte accoste sur la deuxième empreinte, avant d'y injecter la matière nécessaire à la réalisation de la pièce 12 par l'orifice d'alimentation 8, au travers de la chambre triangulaire 3. Une fois la cavité de moulage 2 remplie, on laisse refroidir la matière thermoplastique. Une fois la matière figée, on ouvre le moule pour libérer la pièce 12 formée à l'intérieur de la cavité 2, et pour libérer également une nappe 21 de matière de matière thermoplastique formée dans la chambre triangulaire 3, rattachée à la pièce 12 par la matière qui a figé dans le seuil d'injection 11. La nappe 21 solidifiée peut être ensuite séparée de la pièce 12 par des moyens automatisés, ou manuellement à l'aide d'un outil tranchant.

Dans l'exemple illustré, l'orifice d'alimentation 8 peut être alimenté en matière par une busette d'alimentation positionnée dans le prolongement du plan de joint 6. On peut envisager d'autres variantes de réalisation, dans lesquelles l'alimentation en matière peut être effectuée par exemple par un canal traversant une des faces du moule, et ne passant pas par le plan de joint du moule.

En pratique, et à la différence des mode de réalisation représentés, le plan de base de la pièce à injecter peut être disposé en oblique par rapport à la direction de fermeture du moule, de manière à limiter la pression de fermeture que doit exercer la presse pour maintenir le moule fermé pendant l'injection de la matière plastique.

Afin d'assurer des vitesses d'écoulement sensiblement identiques en chaque point (14, 14') du seuil d'injection 11, la forme de la chambre triangulaire 3 est conçue de telle manière que la longueur de chaque plus court trajet d'écoulement (10, 10') permettant de relier le point d'alimentation matière O, et un point particulier (14, 14') du seuil d'injection 11, représente un trajet sensiblement de même longueur. Dans l'exemple illustré sur la figure 1, le point 14' coïncide avec le point B et représente un des coins de la chambre triangulaire 3, et le point 14 représente par exemple un point se trouvant sensiblement à mi distance entre les deux extrémités A, B du seuil d'injection.

Afin de conserver une même longueur de trajet d'écoulement entre le point O et tous les points du seuil d'injection 11, ou, suivant les variantes de réalisation, afin de conserver une même longueur de trajet d'écoulement entre le point O et une proportion suffisante de points du seuil d'injection 11, la chambre triangulaire 3 est définie comme une nappe présentant une double concavité. La proportion suffisante de points du seuil d'injection peut représenter par exemple au moins un tiers de la longueur du seuil d'injection, avantageusement au moins la moitié de la longueur du seuil d'injection, et de manière préférentielle au moins 90% de la longueur du seuil d'injection.

Par rapport à une nappe triangulaire plane, la double concavité de la nappe allonge dans des proportions adéquates le trajet des lignes d'écoulement autres que celles longeant les côtés du triangle, de manière à les amener à une longueur égale à la plus longue ligne d'écoulement.

Un moule d'injection selon un mode de réalisation de l'invention peut ainsi comporter une chambre triangulaire présentant deux côtés de longueurs sensiblement égales, joignant le point d'alimentation O et les extrémités du seuil d'injection 11. La chambre triangulaire est creusée de manière à former une surface courbe tridimensionnelle autour du centre du triangle, allongeant ainsi les lignes d'écoulement joignant le point d'alimentation O aux points non extrémaux du seuil d'injection.

Dans les modes de réalisation illustrés sur les figures, la plus longue ligne d'écoulement correspond à chaque fois à un des côtés du triangle. Cependant, dans des modes de réalisation non représentés, en fonction de la géométrie du contour de la pièce, cette plus longue distance d'écoulement peut correspondre à un trajet reliant le point O et un point du seuil d'injection autre qu'une extrémité du seuil d'injection.

De nombreuses variantes de réalisation sont envisageables, en fonction de la localisation du point d'alimentation O par rapport au seuil d'injection 11. Les deux côtés de la chambre triangulaire jouxtant le point d'injection peuvent ne pas être de même longueur.

En outre, en fonction de la géométrie du seuil d'injection, suivant que le seuil d'injection est plus ou moins rectiligne, plus ou moins convexe ou plus ou moins concave en direction du point O, la chambre triangulaire (suivant des modes de réalisation non représentés) peut comporter un seul côté est rectiligne issu de O, l'autre côté issu de O étant non rectiligne. Ou encore, la chambre triangulaire (suivant un mode de réalisation non représenté) peut définir un chemin rectiligne quelque part vers le centre de la surface du triangle, et comporter des chemins d'écoulement s'éloignant du plan de joint du moule, sur les bords de la chambre triangulaire.

La figure 2 illustre de manière schématique une vue en trois dimensions d'une chambre triangulaire ménagée dans un moule selon l'invention. Le moule lui-même n'est pas représenté. On retrouve sur cette figure des éléments de la figure 1, les mêmes éléments étant désignés par les mêmes références.

Tel qu'illustré sur la figure 2, la chambre triangulaire 3 est configurée pour pouvoir y injecter de la matière thermoplastique au travers d'une busette 13 accolée au moule (non représenté), l'axe de la busette 13 débouchant ici dans la chambre triangulaire suivant une direction différente de la bissectrice de l'angle AOD.

Dans d'autres modes de réalisation, correspondant par exemple à un mode de réalisation illustré en figure 1, l'axe de la busette 13 débouchant dans la chambre triangulaire suivant la bissectrice de l'angle triangle AOD.

La chambre 3 est sensiblement triangulaire en ce sens qu'elle est délimitée par trois côtés OA, OD, AD. Les côtés OA et OD sont ici sensiblement rectilignes, et le côté AD est proche d'une ligne droite bien que légèrement incurvé. Le bord de la pièce se trouve ici être délimité par une courbe sensiblement plane. Dans des variantes de réalisation non représentées, le bord de la pièce pourrait être délimité par une courbe s'étendant suivant trois dimensions.

La chambre triangulaire 3 définit un volume dans lequel la matière injectée puis refroidie après le remplissage du moule formera une nappe d'injection 21 solidifiée, sous forme de plaque convexe ou de coque convexe d'épaisseur sensiblement constante e2 (ou plus exactement e2 multiplié par un coefficient qui est fonction notamment du retrait de la matière injectée). Avant l'extraction de la pièce hors du moule, souvent encore au moment de l'extraction, la nappe solidifiée est rattachée à la pièce injectée par une ligne de matière d'épaisseur restreinte -par rapport au épaisseur d de la pièce et de la nappe- correspondant à l'emplacement du seuil d'injection.

La figure 2 illustre, pour quatre points particuliers A, B, C, D du seuil d'injection 11, dont deux points particuliers B et D distincts des extrémités A, D du seuil d'injection, les formes que peuvent prendre les trajets d'écoulement de matière les plus courts entre le point d'alimentation O, et ces points du seuil d'injection 11.

Ces trajets d'écoulement les plus courts se trouvent être ici l'intersection de la chambre triangulaire 3, assimilée à une surface, par des plans respectivement $\alpha$, $\beta$, $\gamma$, $\delta$. Les plans $\alpha$, $\beta$, $\gamma$, $\delta$, interceptent ici la surface moyenne à laquelle on assimile la chambre triangulaire 3, respectivement suivant un premier trajet d'écoulement 17, un deuxième trajet d'écoulement 18, un troisième trajet d'écoulement 19, et un quatrième trajet d'écoulement 20.

Par abus de langage, on considère dans ce raisonnement que la chambre triangulaire est assimilable à une surface, en négligeant en première approximation son épaisseur e2 devant ses autres dimensions. La surface retenue peut correspondre par exemple à une surface moyenne s'étendant par exemple à mi épaisseur de la chambre triangulaire 3. On peut également définir, de manière purement conventionnelle, un plan de base de la chambre triangulaire 3, par exemple comme un plan passant par le point d'alimentation O, et par deux points A et D représentant les extrémités du seuil d'injection 11.

Dans les moules selon l'invention, la surface moyenne de la chambre triangulaire 3, s'écarte à un endroit ou à un autre du plan OAD, ou plan de base de la chambre triangulaire. Selon un mode de réalisation préférentiel, la surface moyenne de la chambre triangulaire 3 définit au moins une portion de surface concave dont le contour peut se projeter perpendiculairement au plan OAD de manière à être strictement inscrit dans le triangle OAD.

Tel qu'illustré sur la figure 2, les points géométriques de la chambre triangulaires 3 sont repérés dans un repère orthonormé x, y, z, où x est parallèle à une bissectrice de l'angle AOD, y s'étend dans le plan de base de la chambre triangulaire 3 perpendiculairement à l'axe x, et z et la direction perpendiculaire au plan de base de la chambre triangulaire 3. Ici, z est aussi ici sensiblement perpendiculaire à un plan moyen du bord de la pièce injectée 12.

Dans l'exemple illustré sur la figure 2, la chambre triangulaire 3 est délimitée par deux côtés sensiblement rectilignes OA et OD, de même longueur, et par le seuil d'injection 11. Entre ces trois bords OA et OD et AD, la chambre triangulaire 3 présente une double concavité dans le sens négatif de l'axe z, de manière à amener la longueur des trajets d'écoulement, par exemple le trajet d'écoulement 17 vers le point B du seuil d'injection, respectivement le trajet 18 d'écoulement vers le point C du seuil d'injection, à une valeur supérieure à la longueur d'un segment de ligne droite OB, respectivement OC, et de préférence à des valeurs sensiblement égales entre elles et égales à la longueur des trajets d'écoulement "naturellement " les plus longs, soit les longueurs des trajets OA et OD.

Ainsi, la longueur des trajets d'écoulement 17 et 18 est elle configurée pour être de même valeur que les longueurs des trajets d'écoulement 16 et 19 le long des bords OA et OD de la chambre triangulaire 3. Dans l'exemple illustré sur la figure 2, le seuil d'injection 11 court le long d'une courbe peu incurvée et présentant une très légère concavité tournée vers le point d'alimentation de matière O.

On pourrait imaginer une pièce à injecter (non représentée) dont le seuil d'injection formerait une portion d'arc de cercle autour du point d'alimentation en matière de la nappe d'injection triangulaire associée. Dans ce cas très particulier, même une nappe d'injection plane alimentée par un point d'alimentation centré sur la portion d'arc de cercle serait une nappe d'alimentation dans l'esprit de l'invention, puisque les trajets d'écoulement matière les plus courts entre le point d'alimentation et chacun des points du seuil d'injection seraient les mêmes au travers de cette nappe plane. En pratique, il est relativement rare que les pièces qu'on cherche à injecter présentent justement un tel rebord de pièce circulaire rentrant à la fois de longueur suffisante et de rayon assez faible pour y ménager un seuil d'injection alimenté par une nappe d'injection en quartier de cercle.

Pour cette raison, les moules d'injections selon l'invention peuvent comporter des chambres triangulaires définissant des nappes d'injections non planes. De préférence, au moins une intersection de la nappe avec un plan parallèle au plan de base de la nappe se projette perpendiculairement sur le plan moyen de la nappe suivant une courbe fermée strictement incluse dans le triangle AOD.

Suivant d'autres variantes de réalisation non représentées, on peut envisager des pièces qui présenteraient un bord faisant office de seuil d'injection, ce seuil d'injection formant une courbe concave, la concavité étant tournée vers le point d'alimentation de matière, la concavité faisant face au point d'alimentation matière. Si le rayon de courbure du seuil d'injection est, au moins localement, inférieur à la distance entre le point d'alimentation de matière et le seuil d'injection, alors, tout en restant dans l'esprit de l'invention, on peut être amené à définir une chambre triangulaire comportant au moins un trajet d'écoulement rectiligne ne coïncidant pas avec un des bords de la nappe d'injection, et présentant en outre au moins un trajet d'écoulement curviligne s'éloignant, sur au moins une partie du trajet d'écoulement, du plan de base de la chambre triangulaire.

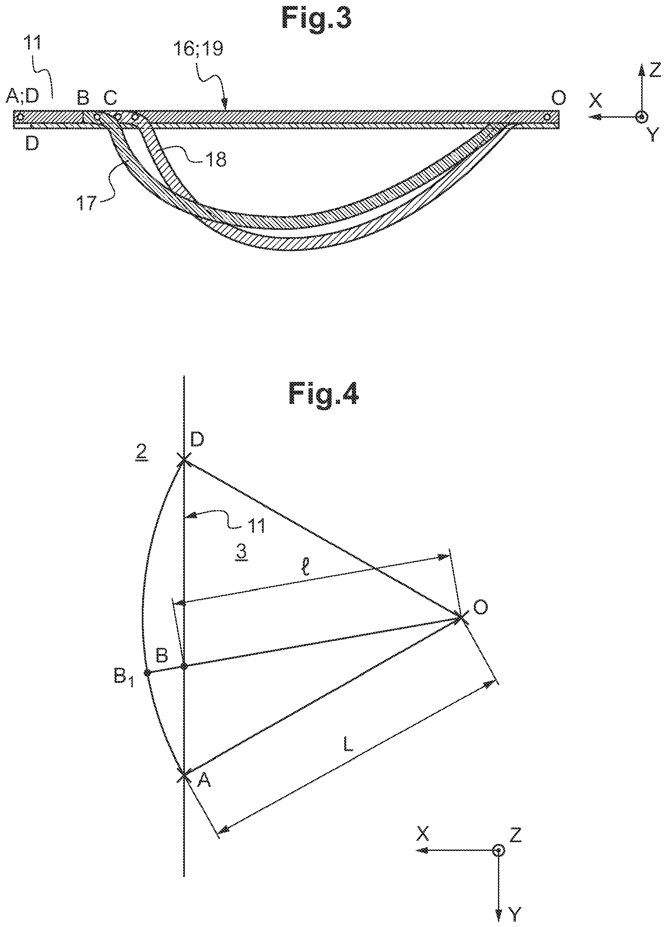

La figure 3 illustre de manière schématique une superposition de sections de la chambre triangulaire 3 dans les plans $\alpha$, $\beta$, $\gamma$, $\delta$ de la figure 2, ces sections étant rabattues sur un même plan. On retrouve sur la figure 3 des éléments communs aux figures précédentes, les mêmes éléments étant désignés par les mêmes références.

Comme on peut le voir sur la figure 3, la forme de la chambre triangulaire 3 est conçue de manière à ce que les longueurs des trajets d'écoulement rectilignes 16 et 19 et les longueurs des trajets d'écoulement courbes 16 et 18 soient les mêmes. Ceci peut être obtenu par exemple en imposant que chacune des sections par un des plans tournant $\alpha$, $\beta$, $\gamma$, $\delta$ soit de même longueur grâce à la courbure prise par la chambre triangulaire 3 dans chacun des plans de coupe de la chambre triangulaire 3. Ici les plans $\alpha$, $\beta$, $\gamma$, $\delta$ sont des plans tournant autour d'un axe passant par le point O et sensiblement perpendiculaire au plan de base de la chambre triangulaire. On peut envisager d'autres variantes de réalisation (non représentées), dans lesquelles certains des trajets d'écoulements les plus courts ne seraient pas compris dans un plan.

La figure 4 est une représentation géométrique illustrant de manière très schématique une chambre triangulaire 3 selon l'invention, représentée ici en vue de dessus par un triangle OAD, le seuil d'injection AD étant ici rectiligne. On retrouve sur la figure 4 quelques repères communs aux figures précédentes, des éléments similaires étant désignés par les mêmes références. Un point B du seuil d'injection se trouve quelque part entre les extrémités du seuil d'injection. On désigne par "L" la distance entre le point d'injection matière O, et chacune des extrémités A,D du seuil d'injection. On désigne par "l" la distance entre le point d'injection matière O et le point intermédiaire B. On désigne par B1 un point fictif obtenu en projetant le point B suivant la direction OB sur le cercle passant par A et D et centré sur O.

La distance BB1 représente la différence de longueur de trajet d'écoulement entre un trajet d'écoulement OB direct que l'on aurait si la chambre triangulaire était plane, et la longueur du trajet d'écoulement le imposé par une chambre triangulaire tridimensionnelle selon l'invention. Une telle différence de longueur d'écoulement peut typiquement atteindre des valeurs supérieures à 10%, voire des valeurs proches de 15%. La différence induite par une chambre telle que schématisée sur la figure 4, permet de ramener à une même valeur L la longueur de tous les plus courts trajets découlement traversant la chambre vers le seuil d'injection 11. On peut visualiser ainsi sur la figure 4, le niveau de compensation de distance d'écoulement apporté par l'invention pour chaque point du seuil d'injection 11.

Dans un moule d'injection selon l'invention, on limite la plus grande différence relative entre deux plus courts trajets d'écoulements associés à deux points du seuil d'injection, à des valeurs inférieures ou égales à 6%, et de préférence à des valeurs inférieures ou égale à 3%.

De manière préférentielle, une chambre triangulaire définissant une nappe d'injection dans un moule selon l'invention est délimitée par deux bords OA et OD rectilignes et de même longueur, sous réserve bien sûr de pouvoir positionner un point d'arrivée de matière O pour ce faire. Il est alors possible d'incurver les trajets d'écoulement correspondant aux trajets à travers la nappe et situés angulairement entre ces deux droites OA et OD représentant les bords latéraux de la chambre triangulaire, de manière à ce que tous les plus courts trajets d'écoulements du point O vers les différents points du seuil d'injection soient sensiblement de même longueur.

L'invention est particulièrement intéressante quand la longueur des côtés latéraux de la chambre triangulaire 3 est plus courte que la longueur curviligne ou rectiligne du seuil d'injection 11, les différences relatives de longueur de trajet d'écoulement étant alors plus importantes, notamment entre les points d'extrémité du seuil d'injection et les points milieu du seuil d'injection.

L'invention ne se limite pas aux exemples d'alimentation décrits et peut se décliner en de nombreuses variantes. La chambre triangulaire 3 peut, entre le point d'alimentation matière O et les points du seuil d'injection 11, ne comporter aucun trajet d'écoulement rectiligne. La chambre triangulaire peut alors présenter une double convexité sans présenter de bord rectiligne et/ou sans présenter de trajet rectiligne central d'écoulement.

Selon des variantes de réalisation non représentées, la chambre triangulaire peut présenter des variations d'épaisseur.

Selon un mode de réalisation préféré, la chambre triangulaire présente cependant une épaisseur sensiblement constante de manière à imprimer à la fois un même taux de cisaillement et une même vitesse d'écoulement à toutes les lignes des flux de matière pénétrant dans la cavité de moulage 2.

Au lieu de présenter une seule double concavité, dans une variante de réalisation non représentée, certains plus courts trajets d'écoulement de la nappe d'injection pourraient dessiner plusieurs "vagues" successives entre le point d'alimentation matière et le point associé du seuil d'injection.

Les moules d'injection selon l'invention permettent de produire des pièces d'aspect injectées en matière plastique, sans recourir à des nappes d'injection s'étendant trop loin de la pièce. Les géométries de moules d'injection selon l'invention permettent de limiter la taille globale du moule d'injection ainsi que les pressions de fermeture de ce moule. Le moule est donc moins cher à fabriquer et peut être utilisé sur une presse d'injection de moindre pression de fermeture.

## Revendications

1. Moule d'injection (1) pour matières plastiques, comprenant au moins une première empreinte (4) et une deuxième empreinte (5) complémentaire de la première empreinte (4), la deuxième empreinte (5) étant configurée pour se fermer sur la première empreinte (4) de manière à définir entre la première et la deuxième empreinte :

   - une cavité de moulage (2) définissant la surface d'au moins une partie d'une pièce à injecter(12),
   - une chambre (3) sensiblement triangulaire présentant un coin d'entrée (O) de matière et un côté opposé (11) de sortie de matière vers la cavité de moulage (2), configurée pour permettre l'écoulement d'une nappe (21) sensiblement triangulaire de matière entre le coin d'entrée (O) et le côté opposé de sortie (11),

   **caractérisé en ce que** la chambre (3) présente une double concavité, de manière à ce que, pour chaque point (14, 14', A,B,C,D) du côté de sortie (11), le plus court trajet d'écoulement (10, 10', 16, 17, 18, 19) entre le coin d'entrée (O) et ce point du côté de sortie, soit de longueur sensiblement égale à une même longueur correspondant à un premier trajet d'écoulement (16).

2.  Moule selon la revendication 1, dans lequel les côtés de la chambre triangulaire (3) adjacents au côté de sortie (11) sont rectilignes.

3.  Moule selon l'une des revendications 1 ou 2, dans lequel la distance en ligne droite entre les deux coins (A, D) de la chambre triangulaire (3) qui sont opposés au coin d'entrée (O), est supérieure ou égale à deux tiers de la longueur (OA, OD) de chacun des côtés de la chambre triangulaire issus du coin d'entrée.

4.  Moule selon l'une quelconque des revendications précédentes, dans lequel le côté de sortie (11) définit une ligne de réduction d'épaisseur (e3) de l'espace disponible à l'écoulement de la matière, à la fois par rapport à l'épaisseur (e2) de la chambre (3) et par rapport à l'épaisseur (e) de la cavité d'injection (2).

5.  Moule selon la revendication précédente, dans lequel, en amont de la restriction d'épaisseur (e3), le long du côté de sortie (11), la chambre (3) définit une portion de nappe sensiblement alignée, dans chaque plan perpendiculaire au côté de sortie (11), avec le rebord de la pièce (12) définie par la cavité de moulage (2).

6.  Moule selon l'une quelconque des revendication précédentes, dans lequel le côté de sortie (11) comprend un premier point (A) de sortie de matière qui est au moins aussi éloigné en ligne droite du coin d'entrée (O), que les autres points (B, C, D) du côté de sortie (11), et comprend au moins un deuxième point de sortie de matière (B, C), distinct du premier point de sortie de matière, strictement plus proche en ligne droite du coin d'entrée (O) que le premier point de sortie (A), le trajet d'écoulement (16, 17) le plus court entre le coin d'entrée (O) et ce deuxième point de sortie (B, C) étant une courbe non rectiligne telle que la différence relative entre les plus courts trajets d'écoulement, respectivement entre le coin d'entrée (O) et le premier point de sortie (A), et entre le coin d'entrée et le deuxième point de sortie (B, C), est inférieure en valeur absolue à la différence relative de distances géométriques respectivement entre le coin d'entrée et le premier point de sortie (OA), et entre le coin d'entrée et le deuxième point de sortie (OB, OC).

7.  Moule selon la revendication précédente, dans lequel, pour chaque deuxième point de sortie de matière (B, C, D), plus proche du coin d'entrée (O) que le premier point de sortie (A), la différence relative entre les plus courts trajets d'écoulement, respectivement entre le coin d'entrée (O) et le premier point de sortie (A), et entre le coin d'entrée (O) et le deuxième point de sortie (B, C, D), est inférieure en valeur absolue à la différence relative de distances géométriques respectivement entre le coin d'entrée et le premier point de sortie (OA), et entre le coin d'entrée et le deuxième point de sortie (OB, OC, OD).

8.  Moule selon la revendication précédente, dans lequel, pour chaque deuxième point de sortie de matière (B, C, D), plus proche du coin d'entrée (O) que le premier point de sortie (A), la différence relative entre les plus courts trajets d'écoulement, respectivement entre le coin d'entrée (O) et le premier point de sortie (A), et entre le coin d'entrée (O) et le deuxième point de sortie (B, C, D), est inférieure en valeur absolue à la moitié de la différence relative de distances géométriques respectivement entre le coin d'entrée et le premier point de sortie (OA), et entre le coin d'entrée et le deuxième point de sortie (OB, OC, OD).

9.  Procédé de fabrication d'une pièce (12) en matière plastique, comprenant une étape d'injection dans un moule (1) selon l'une quelconque des revendications précédentes, et une étape de séparation de la pièce (12) d'avec la nappe de matière (21) formée par la matière figée dans la chambre triangulaire (3).

**Patentansprüche**

1.  Spritzgießwerkzeug (1) für Kunststoffe, umfassend mindestens ein erstes Formnest (4) und ein zweites Formnest (5), das komplementär zum ersten Formnest (4) ausgebildet ist, wobei das zweite Formnest (5) dazu ausgestaltet ist, sich über dem ersten Formnest (4) zu schließen, so dass zwischen dem ersten und dem zweiten Formnest Folgendes definiert wird:

    - eine Spritzgießkavität (2), welche die Oberfläche mindestens eines Teils eines spritzzugießenden Teils (12) definiert,
    - eine im Wesentlichen dreieckige Kammer (3), die eine Materialeintrittsecke (O) und eine entgegengesetzte Materialaustrittsseite (11) zur Spritzgießkavität (2) hin aufweist, die so ausgestaltet ist, dass sie das im Wesentlichen dreieckige Fließen einer Materialbahn (21) zwischen der Eintrittsecke (O) und der entgegengesetzten Austrittsseite (11) ermöglicht,

    **dadurch gekennzeichnet, dass** die Kammer (3) eine doppelte Konkavität aufweist, so dass für jeden Punkt (14, 14', A, B, C, D) der Austrittsseite (11) der kürzeste Fließweg (10, 10', 16, 17, 18, 19) zwischen der Eintrittsecke (O) und diesem Punkt der Austrittsseite eine Länge hat, die im Wesentlichen gleich der Länge ist, die einem ersten Fließweg (16) entspricht.

2. Werkzeug nach Anspruch 1, bei dem die zur Austrittseite (11) benachbarten Seiten der dreieckigen Kammer (3) gerade sind.

3. Werkzeug nach einem der Ansprüche 1 oder 2, bei dem der Abstand in gerader Linie zwischen den beiden Ecken (A, D) der dreieckigen Kammer (3), die entgegengesetzt zur Eintrittsecke (O) sind, größer als oder gleich zwei Drittel der Länge (OA, OD) jeder der von der Eintrittsecke ausgehenden Seiten der dreieckigen Kammer ist.

4. Werkzeug nach einem der vorhergehenden Ansprüche, bei dem die Austrittsseite (11) eine Linie zur Verringerung der Dicke (e3) des zum Fließen des Materials verfügbaren Raums sowohl in Bezug auf die Dicke (e2) der Kammer (3) als auch in Bezug auf die Dicke (e) des Spritzgießkavität (2) definiert.

5. Werkzeug nach dem vorhergehenden Anspruch, bei dem die Kammer (3) stromauf der Dickenbegrenzung (e3), entlang der Austrittsseite (11), einen Stromabschnitt definiert, der in jeder senkrecht zur Austrittsseite (11) verlaufenden Ebene im Wesentlichen mit dem Rand des durch die Spritzgießkavität (2) definierten Teils (12) fluchtet.

6. Werkzeug nach einem der vorhergehenden Ansprüche, bei dem die Austrittsseite (11) einen ersten Materialaustrittspunkt (A) umfasst, der in gerader Linie mindestens genauso weit von der Eintrittsecke (O) entfernt ist wie die anderen Punkte (B, C, D) der Austrittsseite (11), und mindestens einen zweiten Materialaustrittspunkt (B, C) umfasst, der vom ersten Materialaustrittspunkt verschieden ist, der in gerader Linie der Eintrittsecke (O) näher ist als der erste Austrittspunkt (A), wobei der kürzeste Fließweg (16, 17) zwischen der Eintrittsecke (O) und diesem zweiten Austrittspunkt (B, C) eine nicht gerade Krümmung ist, so dass die relative Differenz zwischen den kürzesten Fließwegen zwischen der Eintrittsecke (O) und dem ersten Austrittspunkt (A) und zwischen der Eintrittsecke und dem zweiten Austrittspunkt (B, C) als Absolutwert kleiner ist als die relative Differenz geometrischer Abstände zwischen der Eintrittsecke und dem ersten Austrittspunkt (OA) und zwischen der Eintrittsecke und dem zweiten Austrittspunkt (OB, OC).

7. Werkzeug nach dem vorhergehenden Anspruch, bei dem für jeden zweiten Materialaustrittspunkt (B, C, D), welcher der Eintrittsecke (O) näher als der erste Austrittspunkt (A) ist, die relative Differenz zwischen den kürzesten Fließwegen zwischen der Eintrittsecke (O) und dem ersten Austrittspunkt (A) und zwischen der Eintrittsecke (O) und dem zweiten Austrittspunkt (B, C, D) als Absolutwert kleiner ist als die relative Differenz geometrischer Abstände zwischen der Eintrittsecke und dem ersten Austrittspunkt (OA) und zwischen der Eintrittsecke und dem zweiten Austrittspunkt (OB, OC, OD).

8. Werkzeug nach dem vorhergehenden Anspruch, bei dem für jeden zweiten Materialaustrittspunkt (B, C, D), welcher der Eintrittsecke (O) näher als der erste Austrittspunkt (A) ist, die relative Differenz zwischen den kürzesten Fließwegen zwischen der Eintrittsecke (O) und dem ersten Austrittspunkt (A) und zwischen der Eintrittsecke (O) und dem zweiten Austrittspunkt (B, C, D) als Absolutwert kleiner ist als die Hälfte der relativen Differenz geometrischer Abstände zwischen der Eintrittsecke und dem ersten Austrittspunkt (OA) und zwischen der Eintrittsecke und dem zweiten Austrittspunkt (OB, OC, OD).

9. Verfahren zur Herstellung eines Kunststoffteils (12), umfassend einen Schritt des Spritzgießens in ein Werkzeug (1) nach einem der vorhergehenden Ansprüche und einen Schritt des Durchtrennens des Teils (12) mit der Materialbahn (21), die durch das in der dreieckigen Kammer (3) erstarrte Material gebildet wird.

## Claims

1. Injection mould (1) for plastics, comprising at least one first mould impression (4) and one second mould impression (5) that complements the first impression (4), the second impression (5) being configured to close onto the first impression (4) so as to define between the first and second impressions:

   - a moulding cavity (2) that defines the surface of at least part of a component (12) that is to be injection moulded,
   - a substantially triangular chamber (3), having a material inlet corner (O) and an opposite side (11) for the exit of material towards the moulding cavity (2), configured to allow a substantially triangular sheet (21) of material to flow between the inlet corner (O) and the opposite outlet side (11),

   **characterized in that** the chamber (3) has dual concavity so that, for each point (14, 14', A, B, C, D) on the outlet side (11), the shortest flow path (10, 10', 16, 17, 18, 19) between the inlet corner (O) and this point on the outlet side is of a length substantially equal to a same length corresponding to a first flow path (16).

2. Mould according to Claim 1, in which the sides of the triangular chamber (3) that are adjacent to the outlet side (11) are rectilinear.

3. Mould according to one of Claims 1 and 2, in which the straight-line distance between the two corners (A, D) of the triangular chamber (3) which are opposite the inlet corner (O), is greater than or equal to two thirds of the length (OA, OD) of each of the sides of the triangular chamber starting from the inlet corner.

4. Mould according to any one of the preceding claims, in which the outlet side (11) defines a line of reduction in thickness (e3) of the space available for the flow of material, both with respect to the thickness (e2) of the chamber (3) and with respect to the thickness (e) of the injection cavity (2).

5. Mould according to the preceding claim, in which, upstream of the thickness restriction (e3), along the outlet side (11), the chamber (3) defines a sheet portion that is substantially aligned, in each plane perpendicular to the outlet side (11), with the edge of the component (12) defined by the moulding cavity (2).

6. Mould according to any one of the preceding claims, in which the outlet side (11) comprises a first material outlet point (A) which is at least as far away in a straight line from the inlet corner (O) as the other points (B, C, D) on the outlet side (11) and comprises at least one second material outlet point (B, C), distinct from the first material outlet point, strictly closer in a straight line to the inlet corner (O) than the first outlet point (A), the shortest flow path (16, 17) between the inlet corner (O) and this second outlet points (B, C) being a non-rectilinear curve such that the relative difference between the shortest flow paths between the inlet corner (O) and the first outlet point (A), and between the inlet corner and the second outlet point (B, C), respectively, is less in terms of absolute value than the relative difference in geometric distances respectively separating the inlet corner and the first outlet point (OA) and separating the inlet corner and the second outlet point (OB, OC).

7. Mould according to the preceding claim, in which, for each second material outlet point (B, C, D) closer to the inlet corner (O) than the first outlet point (A), the relative difference between the shortest flow paths, between the inlet corner (O) and first outlet point (A), and between the inlet point (O) and the second outlet point (B, C, D), respectively, is less in terms of absolute value than the relative difference in geometric distances respectively separating the inlet corner and the first outlet point (OA) and separating the inlet corner and the second outlet point (OB, OC, OD).

8. Mould according to the preceding claim, in which, for each second material outlet point (B, C, D) closer to the inlet corner (O) than the first outlet point (A), the relative difference between the shortest flow paths separating the inlet corner (O) and the first inlet point (A) and separating the inlet corner (O) and the second outlet point (B, C, D) respectively, is less in terms of absolute value than half the relative difference in geometric distances respectively separating the inlet corner and the first outlet point (OA) and separating the inlet corner and the second outlet point (OB, OC, OD).

9. Method for manufacturing a plastic component (12), comprising a step of injection into a mould (1) according to any one of the preceding claims, and a step of detaching the component (12) from the sheet of material (21) formed by the material that has set in the triangular chamber (3).

# Fig.1

# Fig.2

# Fig.3

# Fig.4

**RÉFÉRENCES CITÉES DANS LA DESCRIPTION**

**Documents brevets cités dans la description**

- DE 102013205141 A1